# EUROPÄISCHE PATENTSCHRIFT

(11) **EP 3 861 307 B1**
(45) Veröffentlichungstag und Bekanntmachung des Hinweises auf die Patenterteilung: **04.12.2024**
(21) Anmeldenummer: 19790122.6
(22) Anmeldetag: 27.09.2019
(51) Int. Cl.: G01H 1/00, G01H 3/08

(54) **VERFAHREN ZUM BESTIMMEN EINES BETRIEBSZUSTANDS FÜR EIN ELEKTRISCHES BETRIEBSMITTEL MIT EINEM SCHALTERELEMENT**
METHOD FOR DETERMINING AN OPERATING STATE FOR AN ITEM OF ELECTRICAL EQUIPMENT WITH A SWITCH ELEMENT
PROCÉDÉ POUR DÉTERMINER UN ÉTAT DE FONCTIONNEMENT POUR UN MATÉRIEL ÉLECTRIQUE MUNI D'UN ÉLÉMENT COMMUTATEUR

(30) Priorität: 01.10.2018 DE 102018124210
(43) Veröffentlichungstag der Anmeldung: 11.08.2021
(73) Patentinhaber: Hochschule für Technik und Wirtschaft Berlin, 10318 Berlin (DE)
(72) Erfinder: GRÄF, Thomas, 12459 Berlin (DE); MENGE, Matthias, 12459 Berlin (DE); KÖLLING, Moritz, 12459 Berlin (DE)
(74) Vertreter: Bittner, Thomas L.
(86) Internationale Anmeldenummer: PCT/DE2019/100859
(87) Internationale Veröffentlichungsnummer: WO 2020/069698

(56) Entgegenhaltungen:
- US-A- 4 980 844
- US-A1- 2012 197 546
- US-A1- 2015 233 792
- US-A1- 2017 045 481

## Beschreibung

Die Erfindung betrifft ein Verfahren sowie eine Anordnung zum Bestimmen eines Betriebszustands für ein elektrisches Betriebsmittel mit einem Schaltelement.

### Hintergrund

Der Ausbau sowie die Erneuerung des Stromnetzes sind zentral für eine neue Energieinfrastruktur zur zukünftigen Sicherstellung der Energieversorgung. An die Stromnetze werden dabei eine Reihe von Anforderungen gestellt, um beispielsweise auf schwankende Stromerzeugung aus Wind- und Solarenergie effektiv reagieren zu können. Neben optimaler Systemsteuerung durch intelligente Messsysteme und intelligentem Lastmanagement ist auch das sorgfältige Überwachen der elektrischen Betriebsmittel von Hochspannungs-, Mittelspannungs- und Niederspannungsnetzen für Versorgungsunternehmen von essentieller Bedeutung.

Systeme für die Überwachung von elektrischen Betriebsmitteln aller Art sind bereits heute an vielen Stellen des Stromversorgungsnetzes im Einsatz. Trotzdem gibt es zahlreiche Anforderungen, die durch die konventionellen Ansätze bisher nicht erfüllt werden können. Insbesondere ist bisher keine flächendeckende Überwachung möglich.

Elektrische Betriebsmittel wie beispielsweise Leistungsschalter besitzen viele mechanische Bauteile, die mit jedem Schaltvorgang beansprucht werden. Abhängig von der Zahl der Ein- und Ausschaltvorgänge führt dies zu einem mittleren bis hohen Verschleiß der Bauteile. Einer besonders hohen Beanspruchung sind beispielsweise Stoßdämpfer und Puffer ausgesetzt. Kommt es zu einem Ausfall oder einer Veränderung eines Bauteils, kann dies dazu führen, dass der Leistungsschalter nicht mehr schaltet oder sogar zerstört wird. Dies kann wirtschaftliche Folgekosten nach sich ziehen, wenn insbesondere großflächig Systeme zu versorgen sind, jedoch infolge des Versagens eines Leistungsschalters nicht weiter betrieben werden können.

Folglich müssen viele elektrische Betriebsmittel regelmäßig einer Prüfung durch Wartungspersonal unterzogen werden. Auf diese Weise kann der Betriebszustand des elektrischen Betriebsmittels und der Zustand seiner Bauteile rechtzeitig als problematisch bestimmt und das Betriebsmittel oder ein Bauteil gegebenenfalls ausgewechselt werden. Die Prüfung durch Wartungspersonal führt jedoch zu substantiellen Kosten. Um zum Beispiel Leistungsschalter von Windkraftanlagen zu überprüfen, muss ein Wartungstechniker nicht nur die notwendigen Untersuchung durchführen, sondern die Windkraftanlage auch besuchen, was insbesondere im Offshore-Bereich mit einem erheblichen Kosten- und Zeitaufwand verbunden sein kann.

Es wäre daher vorteilhaft, wenn elektrische Betriebsmittel wie Leistungsschalter automatisch überwacht und Ergebnisse durchgängig an eine Leitzentrale weitergegeben werden könnten. Auf diese Weise würde eine kostenintensive Untersuchung durch einen Wartungstechniker erst ausgelöst, wenn die automatische Überwachung das Vorliegen eines Problems oder ungünstiger Veränderungen wesentlicher Eigenschaften meldet.

In dem Dokument US 4 980 844 A werden ein Verfahren und eine Vorrichtung zum Diagnostizieren des mechanischen Zustands einer Maschine offenbart. Das erfindungsgemäße Verfahren umfasst die folgenden Schritte: Erfassen von Referenzschwingungseigenschaften einer Maschine im Zeitbereich; Erstellen einer Referenzsignatur aus den Referenzschwingungseigenschaften; Speichern der Referenzsignatur; Erfassung von Testschwingungseigenschaften derselben Maschine im Zeitbereich; Erstellen einer Testsignatur aus den Testvibrationseigenschaften; automatisches Berechnen eines gemessenen Abstands zwischen mindestens einem Punkt der Referenzsignatur und mindestens einem entsprechenden Punkt auf der Testsignatur; automatischer Vergleich der gemessenen Entfernung mit einem Schwellenwert, um festzustellen, ob die Maschine normal oder abnormal arbeitet; und Bereitstellen eines Signals, wenn der Vergleich einen abnormalen Betrieb anzeigt. Es ist auch eine Vorrichtung zum Implementieren des erfindungsgemäßen Verfahrens offenbart.

Das Dokument US 2017/045481 A1 offenbart ein Komponentenüberwachungssystem, das zur Überwachung der Eigenschaften der Komponenten der Leistungsschalterbaugruppe strukturiert ist. Das Komponentenüberwachungssystem umfasst eine Aufzeichnungsanordnung, eine Anzahl von Vibrationssensoranordnungen, eine Vergleichsanordnung und eine Ausgangsanordnung. Die Aufzeichnungsbaugruppe enthält ausgewählte Nenndaten für eine ausgewählte Leistungsschalterkomponente. Die Schwingungssensoranordnung ist so strukturiert, dass sie eine Anzahl von tatsächlichen Komponentenmerkmalen für einen wesentlichen Teil der Leistungsschalteranordnung misst und tatsächliche Ausgangsdaten der Komponentenmerkmale überträgt. Die Vergleichsanordnung ist so strukturiert, dass sie ein elektronisches Signal von der Aufzeichnungsanordnung und den Sensoranordnungen empfängt, die Ausgangsdaten der tatsächlichen Komponentenkennlinie jeder Sensoranordnung mit den ausgewählten Nenndaten vergleicht und ein Anzeigesignal liefert, ob die Ausgangsdaten der Sensoranordnung akzeptabel sind im Vergleich zu den ausgewählten Nenndaten. Die Ausgabeanordnung umfasst eine Kommunikationsanordnung und eine Ausgabegerät.

Ausführungsformen von Verfahren und Systemen zum Identifizieren eines physikalischen Ereignisses unter Verwendung einer Schwingungssignatur werden in Dokument US 2012/197546 A1 offenbart. Ein Aspekt des Verfahrens umfasst das Bilden einer oder mehrerer identifizierter Schwingungssignaturen, die jeweils einem jeweiligen bekannten physikalischen Ereignis zugeordnet sind. Das Verfahren umfasst ferner das Empfangen einer Schwingungssignatur, die einem tatsächlichen physikalischen Ereignis zugeordnet ist, und das Identifizieren des tatsächlichen physikalischen Ereignisses durch Vergleichen der Schwingungssignatur mit der einen oder den mehreren identifizierten Schwingungssignaturen, die jeweils einem jeweiligen bekannten physikalischen Ereignis zugeordnet sind.

Das Dokument US 2015/233792 A1 betrifft Verfahren zur effizienten und zuverlässigen Fehlerdiagnose in Komponenten mechanischer Systeme. Gemäß einem Aspekt wird ein Hüllkurven-Spektrogramm mit mehreren Skalen verwendet, um Defekte in einer sich bewegenden Komponente eines mechanischen Systems zu diagnostizieren oder zu erkennen. Gemäß einem weiteren Aspekt wird ein logisches Regelmodell, das eine Klassifizierung von Merkmalen verwendet, die Einzel- oder Multisensordaten zugeordnet sind, zur Diagnose von Defekten in Komponenten mechanischer Systeme verwendet.

### Zusammenfassung

Aufgabe der Erfindung ist es, ein Verfahren sowie eine Anordnung zum Bestimmen eines Betriebszustands für ein elektrisches Betriebsmittel mit einem Schaltelement anzugeben, sodass eine automatische, durchgängige und zuverlässige Überwachung des elektrischen Betriebsmittels mit einem Schaltelement erfolgen kann.

Zur Lösung sind ein Verfahren sowie eine Anordnung zum Bestimmen eines Betriebszustands für ein elektrisches Betriebsmittel mit einem Schaltelement nach den unabhängigen Ansprüchen 1 und 14 geschaffen. Ausgestaltungen sind Gegenstand abhängiger Unteransprüche.

Nach einem Aspekt ist ein Verfahren zum Bestimmen eines Betriebszustands für ein elektrisches Betriebsmittel mit einem Schaltelement geschaffen. In dem Verfahren werden zum einen Messsignale für ein elektrisches Betriebsmittel mit einem Schaltelement mittels einer Sensoreinrichtung, die einen faseroptischen Sensor aufweist, erfasst. Hierbei umfassen die Messsignale für das elektrische Betriebsmittel wenigstens eine Art von Messsignalen aus der folgenden Gruppe: Vibrationssignale und Schallsignale. Des Weiteren werden die Messsignale mittels einer Auswerteeinrichtung verarbeitet. Hierbei umfasst das Verarbeiten eine Analog-Digital-Wandlung der Messsignale. Des Weiteren wird ein Betriebszustand für das elektrische Betriebsmittel aus einer Gruppe von verschiedenen Betriebszuständen mittels der Auswerteeinrichtung bestimmt. Dazu werden die digitalen Messsignale mit Vergleichssignalen verglichen, die jeweils mindestens einem der verschiedenen Betriebszustände zugeordnet sind.

Nach einem weiteren Aspekt ist eine Anordnung mit einem elektrischen Betriebsmittel, welches ein Schaltelement aufweist, einer Sensoreinrichtung und einer Auswerteeinrichtung geschaffen. Die Sensoreinrichtung weist einen faseroptischen Sensor auf und ist eingerichtet, Messsignale für das elektrische Betriebsmittel zu erfassen, wobei die Messsignale für das elektrische Betriebsmittel wenigstens eine Art von Messsignalen aus der folgenden Gruppe umfassen: Vibrationssignale und Schallsignale. Die Auswerteeinrichtung ist eingerichtet, die Messsignale zu verarbeiten, wobei das Verarbeiten eine Analog-Digital-Wandlung der Messsignale in digitale Messsignale umfasst. Die Auswerteeinrichtung ist außerdem eingerichtet, einen Betriebszustand für das elektrische Betriebsmittel aus einer Gruppe von verschiedenen Betriebszuständen zu bestimmen, wobei hierbei die digitalen Messsignale mit Vergleichssignalen verglichen werden, die jeweils mindestens einem der verschiedenen Betriebszustände zugeordnet sind.

Vibrationen im Sinne der Offenbarung sind mechanische Schwingungen von Körpern oder Stoffen. Umfasst sind periodische Schwingungen, aber auch aperiodische Signale wie zum Beispiel Dehnungen oder Stöße. Ferner kann der Sensor eingerichtet sein, weitere physikalische Messgrößen und Messsignale zu erfassen.

Die Messsignale können sowohl Vibrationssignale als auch Schallsignale umfassen.

Die Messsignale können mithilfe von mehreren Sensoren erfasst werden. Es können für die Analog-Digital-Wandlung ein Analog-Digital-Wandler im Multiplexverfahren oder mehrere Analog-Digital-Wandler im Parallelverfahren zum Einsatz kommen. Die Messsignale verschiedener Sensoren können zueinander in Beziehung gesetzt werden.

Es kann vorgesehen sein, dass die Sensoren Messsignale in verschiedenen Frequenzbändern erfassen. Die Frequenzbänder können sich überschneiden oder voneinander getrennt sein. Es kann des Weiteren vorgesehen sein, die Frequenzbänder unterschiedlicher Sensoren miteinander zu kombinieren, um die erfassbare Frequenzbandbreite zu erhöhen.

Das elektrische Betriebsmittel kann eine Antriebsmechanik aufweisen. Die Antriebsmechanik kann innerhalb eines Gehäuses angeordnet sein. Es kann mindestens ein Sensor innerhalb, außerhalb und/oder am Gehäuse der Antriebsmechanik angeordnet sein. Es kann vorgesehen sein, dass mindestens ein Steuersignal, zum Beispiel ein motorstartendes Steuersignal, als Messsignal erfasst und verarbeitet wird.

Es kann vorgesehen sein, dass mindestens ein Messsignal digital ohne Analog-Digital-Wandlung an die Auswerteeinrichtung gesendet wird. Es kann vorgesehen sein, mindestens ein analoges Messsignal vor der Analog-Digital-Wandlung mittels eines Verstärkers zu verstärken.

Die Messsignale werden mithilfe eines faseroptischen Sensors erfasst. Insbesondere können Vibrationssignale mithilfe eines faseroptischen Vibrationssensors erfasst werden. Faseroptische Sensoren können eine nicht-leitungsgebundene Übertragung des Messsignals ermöglichen und können deswegen insbesondere geeignet sein, in hochspannungsführenden Betriebsmitteln eingesetzt zu werden. Faseroptische Sensoren können beispielsweise an hochspannungsführenden Schalterpolen befestigt sein und dabei aussagekräftige Messsignale des Schalterpols liefern. Es kann auch vorgesehen sein, die Messsignale mithilfe mindestens eines nicht-faseroptischen Sensors, zum Beispiel eines Piezomikrofons, eines piezoelektrischen Ultraschallsensors, eines nicht-faseroptischen Vibrationssensors, eines Kondensatormikrofons oder eines Körperschallaufnehmers weiter zu erfassen.

Die Schallsignale können wenigstens eine Art Schallsignale aus der Gruppe Infraschallsignale, Hörschallsignale und Ultraschallsignale umfassen. Schallsignale im Sinne der Offenbarung umfassen Druck- und Dichteschwankungen in einem Medium. Dabei kann das Medium sowohl ein Körper sein (Körperschall) als auch Luft (Luftschall).

Falls die Messsignale mithilfe von mehreren Sensoren erfasst werden, können insbesondere ein Intraschall-Frequenzband und ein Ultraschall-Frequenzband mittels eines Vibrationssensors beziehungsweise eines Ultraschallsensors parallel erfasst und kombiniert verarbeitet werden.

Die Schallsignale und Vibrationssignale können durch mechanische Bauteile des elektrischen Betriebsmittels wie zum Beispiel Motoren, Federn, Wellen, Stoßdämpfer, Puffer oder durch von Personen bedingten Handlungen verursacht werden. Des Weiteren können Schallsignale und Vibrationssignale durch elektromagnetische Anregungen und/oder externe Quellen wie beispielsweise laufende Maschinen in der Nähe des elektrischen Betriebsmittels verursacht werden.

Der Betriebszustand für ein elektrisches Betriebsmittel kann in einer Schaltanlage bestimmt werden. Der Betriebszustand für das elektrische Betriebsmittel kann alternativ oder ergänzend auch außerhalb der Schaltanlage bestimmt werden. Es kann vorgesehen sein, dass das elektrische Betriebsmittel mehr als ein Schaltelement aufweist. Das mindestens eine Schaltelement kann ein oder mehrere der folgenden Elemente aufweisen: Leistungsschalter, Lasttrennschalter, Sicherungslast-Trennschalter, Hochspannungs-Hochleistungssicherung, Niederspannungs-Hochleistungssicherung, Erder, Kurzschlussstrombegrenzer, Recloser und/oder Schütze.

Der Betriebszustand kann für ein elektrisches Betriebsmittel, welches Hochspannung führt, bestimmt werden. Hochspannungen im Sinne der Erfindung sind elektrische Spannungen über 1 kV. Insbesondere kann vorgesehen sein, dass das elektrische Betriebsmittel Hochspannungen von 3 kV, 6 kV, 10 kV, 15 kV, 20 kV, 30 kV, 60 kW, 110 kV, 220 kV, 380 kV, 500 kV, 700 kV oder 1150 kV führt. Hochspannungen ab 220 kV werden auch als Höchstspannungen bezeichnet. Der Betriebszustand kann auch für ein elektrisches Betriebsmittel, welches Niederspannung führt, bestimmt werden. Es kann insbesondere vorgesehen sein, dass das elektrische Betriebsmittel Niederspannung bis höchstens 1 kV führt.

Die Messsignale können beim Verarbeiten vorverarbeitet werden, wobei hierbei für die Messsignale das Signal-Rausch-Verhältnis vergrößert wird. Die Vorverarbeitung kann digital und/oder analog erfolgen. Analoge Verfahren zur Vorverarbeitung sind zum Beispiel Filter wie Tiefpass-, Hochpass-, Bandpass- oder Anti-Aliasing-Filter. Digitale Verfahren zur Vorverarbeitung sind zum Beispiel Filter wie Kerbfilter (notch filter) sowie Wavelet-Analyse, diskrete Fourier-Transformation, Fast Fourier Transformation und Short-Time-Fourier-Transformation. Werden mehrere Sensoren verwendet, kann auf jedes der Messsignale jeweils keines, eines oder mehrere der Verfahren angewendet werden. Die Messsignale können mittels eines Anti-Aliasing-Filters vorverarbeitet werden.

Werden mehrere Sensoren verwendet, kann des Weiteren das Signal-Rausch-Verhältnis vergrößert werden, indem die Messsignale verschiedener Sensoren miteinander in Beziehung gesetzt und/oder gemittelt werden. Dies kann im Rahmen einer kanalübergreifenden digitalen Signalvorverarbeitung erfolgen.

In einer Ausgestaltung können Verfahren zur Kanalseparation auf die Messsignale angewendet werden. Hierdurch können zum Beispiel Vibrationssignale und Schallsignale innerhalb desselben Messsignals getrennt und unterschiedlichen Quellen zugeordnet werden. Dies kann die Bestimmung des Betriebszustands des elektrischen Betriebsmittels substantiell vereinfachen.

Beim Bestimmen des Betriebszustands kann mindestens ein den Betriebszustand des elektrischen Betriebsmittels charakterisierendes Zustandsmerkmal aus den digitalen Messsignalen bestimmt werden.

Es kann vorgesehen sein, dass der Betriebszustand durch ein einzelnes Zustandsmerkmal charakterisiert ist, durch eine Mehrzahl von Zustandsmerkmalen jeweils charakterisiert ist oder durch eine Kombination einer Mehrzahl von Zustandsmerkmalen charakterisiert ist. Falls die Messsignale mithilfe von mehreren Sensoren erfasst werden, kann mindestens ein Zustandsmerkmal eine Position einer Vibrationssignalquelle oder Schallsignalquelle sein, die mittels Laufzeiteffekten bestimmt wird. Mindestens ein Zustandsmerkmal kann auch das Messsignal und/oder das Vergleichssignal selbst sein. Es kann vorgesehen sein, dass mindestens ein Zustandsmerkmal bestimmt wird, indem mindestens ein Messsignal transformiert wird, sodass möglichst nur solche Daten verbleiben, die eine Bestimmung des Betriebszustands des elektrischen Betriebsmittels zuverlässig ermöglichen. Zustandsmerkmale können aus einzelnen Messsignalen bestimmt werden und/oder, indem unterschiedliche Messsignale zusammengeführt werden.

Mindestens ein Zustandsmerkmal kann mittels mindestens eines Mitglieds der Gruppe Fourier-Transformation, Kurzzeit-Fourier-Transformation, Wavelet-Transformation, Template-Matching, und Hüllkurve bestimmt werden. Mittels Kurzzeit-Fourier-Transformation kann insbesondere ein Spektrogramm erzeugt werden. Ein Spektrogramm kann auch mittels einer Wavelet-Transformation erzeugt werden. Die Bestimmung des mindestens einen Zustandsmerkmals kann einstufig oder mehrstufig erfolgen.

Der Betriebszustand des elektrischen Betriebsmittels kann durch Klassifikation des mindestens einen Zustandsmerkmals mittels mindestens eines Klassifikationsverfahrens bestimmt werden. Das Vergleichen der digitalen Messsignale mit Vergleichssignalen umfasst die Klassifikation des Betriebszustands.

Es kann auch vorgesehen sein, dass das Vergleichen der digitalen Messsignale mit Vergleichssignalen ausschließlich in der Klassifikation des Betriebszustands besteht. Das Klassifikationsverfahren ist ein maschinelles Klassifikationsverfahren.

Als Klassifikationsverfahren können beispielsweise künstliche neuronale Netze, Fuzzy-Logiken oder Entscheidungsbäume eingesetzt werden. Die Klassifikation des Betriebszustands kann einstufig oder mehrstufig erfolgen.

Die Klassifikation kann erfolgen, indem mindestens ein Zustandsmerkmal mittels Zuordnung vergleichbarer Messsignale zu bestimmten Ursachen und/oder Gruppierungen vergleichbarer Messsignale analysiert wird.

Der Betriebszustand kann durch wenigstens einen der folgenden Zustände charakterisiert sein:
- einen Defekt oder eine Funktionsfähigkeit eines Bauteils des elektrischen Betriebsmittels,
- einen Kurzschluss innerhalb des elektrischen Betriebsmittels,
- einen Wartungs- und/oder Reinigungsbedarf des elektrischen Betriebsmittels oder eines Bauteils des elektrischen Betriebsmittels,
- einen Verschleißzustand und/oder einen Verschleißgrad eines Bauteils, beispielsweise eines Kontakts,
- bauteilspezifische Zustände wie
   - ein Status eines Feder-Bauteils (angezogen/entspannt, normales/anormales Frequenzspektrum), eines Speicherantriebs, eines Anschlagdämpfers oder von Verklinkungen,
   - ein Bewegungsstatus und/oder eine Drehgeschwindigkeit eines rotierenden Bauteils, beispielsweise einer Schalterwelle oder einer Antriebswelle,
   - eine Stellung eines Kontaktes eines Schalterpols (offen/geschlossen),
   - eine Geschwindigkeit eines Öffnens und/oder Schließens eines Kontaktes,
   - eine zeitliche Reihenfolge und/oder ein zeitlicher Abstand von Öffnen und/oder Schließen mehrerer Kontakte,
   - ein erfolgreicher Abschluss eines Schaltvorgangs, beispielsweise ein erfolgreiches Schalten magnetischer Bauteile, beispielsweise eines Einschaltmagneten oder Ausschaltmagneten,
   - eine Antriebsenergie für einen Motoraufzug, zum Beispiel bei einem Federspeicherantrieb, bezüglich eines Schwellwerts,
   - ein Energieumsatz eines Antriebs, beispielsweise eines Federantriebs,
   - ein Interaktionsgrad mechanischer Bauteile derart, dass eine Schaltfunktion gegeben ist.

Es kann vorgesehen sein, dass das Klassifikationsverfahren mittels der Vergleichssignale vor der Ausführung des Verfahrens trainiert wird. Ergänzend oder alternativ kann auch vorgesehen sein, dass das Klassifikationsverfahren im laufenden Betrieb trainiert wird.

Es kann eine Zeitentwicklung des Betriebszustands des elektrischen Betriebsmittels und/oder des mindestens einen Zustandsmerkmals bestimmt werden. Die Zeitentwicklung des Betriebszustands kann als Menge verschiedener Betriebszustände gestaltet sein, die jeweils einem Zeitpunkt zugeordnet sind. Ein Vergleich von Betriebszuständen zu verschiedenen Zeitpunkten kann eingesetzt werden, um die Zuverlässigkeit der Bestimmung des Betriebszustands zu erhöhen.

Die Bestimmung des mindestens einen Zustandsmerkmals und des Betriebszustands kann in Hardware und/oder Software umgesetzt sein. Es können ein oder mehrere Prozessoren der Gruppe CPU, Mikroprozessor, eingebettetes System, digitaler Signalprozessor, GPU eingesetzt werden. Es können ein oder mehrere konfigurierbare Logikbausteine der Gruppe CPLD (Complex Programmable Logic Device), FPGA (Field Programmable Gate Array), Gate Array, Standard Cell Array eingesetzt werden. Es können Full Custom Chips eingesetzt werden.

Es kann eine Analyse des bestimmten Betriebszustands mit einem Analyseergebnis vorgesehen sein. Der Betriebszustand kann einem Neuzustand des elektrischen Betriebsmittels oder einem Verschleißzustand des elektrischen Betriebsmittels zugeordnet werden.

Es kann vorgesehen sein, mindestens ein Ergebnis an eine Ausgabeeinrichtung weiterzuleiten. Das Ergebnis kann den bestimmten Betriebszustand und/oder das Analyseergebnis der Analyse des bestimmten Betriebszustands umfassen. Die Ausgabeeinrichtung kann lokal oder über ein Netzwerk mit der Auswerteeinrichtung verbunden sein. Die Weiterleitung des Ergebnisses kann durchgängig erfolgen. Es kann auch vorgesehen sein, mehrere Ergebnisse der Anordnung und/oder Ergebnisse aus mehreren Anordnungen in der Ausgabeeinrichtung zusammenzuführen. Es kann eine durchgängige Überwachung von Ergebnissen durch das Wartungspersonal vorgesehen sein. Die Weiterleitung kann zum Beispiel über ein Netzwerk erfolgen. Bei spontan auftretenden Problemen können auf diese Weise geeignete Maßnahmen durch das Wartungspersonal ergriffen werden, sodass ein elektrisches Betriebsmittel nicht länger oder überhaupt außer Betrieb genommen werden muss. Des Weiteren können routinemäßige Überprüfungen des elektrischen Betriebsmittels entfallen oder das Wartungsintervall kann verlängert werden. Hierdurch kann ein Ausbau, eine Außerbetriebnahme und/oder ein Eingriff in die Steuerung des elektrischen Betriebsmittels vermieden werden. Dies kann zu einer substantiellen Kostenersparnis führen.

Die Messdaten und/oder mindestens ein Ergebnis können auf einem physikalischen Datenträger gespeichert werden.

Die Ausgabeeinrichtung kann ein oder mehrere Ausgabegeräte umfassen. Dies kann beispielsweise ein Display oder ein Lautsprecher sein. Es kann vorgesehen sein, mindestens ein Ergebnis für die Ausgabe aufzubereiten. Mindestens ein Ergebnis kann in mindestens einer der folgenden Formen ausgegeben werden: tabellarische Form, Graphen, Diagramme, Auflistung von Wahrscheinlichkeiten und Signaltöne. Es kann eine binäre oder ternäre Darstellung mindestens eines Ergebnisses erfolgen. Die Darstellung mindestens eines Ergebnisses kann farblich gestaltet sein, beispielsweise rot/grün (binär) oder als Ampel (ternär). Dabei kann die Farbe Grün einen unkritischen Betriebszustand, die Farbe Gelb einen vorkritischen Betriebszustand und die Farbe Rot einen kritischen Betriebszustand signalisieren.

Die Ausgabe mindestens eines Ergebnisses kann eine Handlungsanweisung an das Wartungspersonal umfassen. Beispielsweise kann ein kritischer Betriebszustand mit der Anweisung einer sofortigen Wartung verbunden sein und/oder ein vorkritischer Betriebszustand mit der Anweisung einer zeitnahen Wartung verbunden sein.

Die Auswerteeinrichtung kann mit einem Eingabegerät, beispielsweise einer Tastatur, verbunden sein. Die Verbindung kann lokal und/oder über ein Netzwerk erfolgen. Mittels des Eingabegeräts kann beispielsweise das Bestimmen des Betriebszustands konfiguriert und/oder die Ausgabe mindestens eines Ergebnisses angepasst werden.

Die Auswerteeinrichtung kann innerhalb und/oder außerhalb des elektrischen Betriebsmittels angeordnet sein.

In Verbindung mit der Anordnung können die vorangehend im Zusammenhang mit dem Verfahren zum Bestimmen des Betriebszustands für ein elektrisches Betriebsmittel mit einem Schaltelement beschriebenen Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung zum Bestimmen eines Betriebszustands eines Leistungsschalters;
- Fig. 2: eine schematische Darstellung des Verfahrens zum Bestimmen des Betriebszustands des Leistungsschalters;
- Fig. 3: eine schematische Darstellung eines Spektrogramms auf Basis von Messsignalen des Leistungsschalters;
- Fig. 4: eine schematische Darstellung eines Spektrogramms auf Basis von Messsignalen des Leistungsschalters, bei denen ein Gesamtschaltwinkel über einen Stoßdämpfer des Leistungsschalters verändert wurde;
- Fig. 5: eine schematische Darstellung eines Spektrogramms auf Basis von Messsignalen des Leistungsschalters, wobei ein Stoßdämpfer mit einer modifizierten Dämpfungscharakteristik verwendet wurde;
- Fig. 6: eine schematische Darstellung eines Spektrogramms auf Basis von Messsignalen von an Schalterpolen angebrachten akustischen Sensoren bei einem Einschaltvorgang des Leistungsschalters mit einem vergrößerten Schalthub an den Schalterpolen von etwa 13 mm;
- Fig. 7: eine weitere schematische Darstellung eines Spektrogramms auf Basis von Messsignalen von an Schalterpolen angebrachten akustischen Sensoren bei einem Einschaltvorgang des Leistungsschalters bei verringertem Schalthub von etwa 10 mm;
- Fig. 8: eine schematische Darstellung einer auf Basis einer Wavelet-Analyse ermittelten spektralen Frequenzverteilung über der Zeit bei einem Einschaltvorgang mit erhöhtem Schalthub des Leistungsschalters;
- Fig. 9: eine weitere schematische Darstellung einer auf Basis einer Wavelet-Analyse ermittelten spektralen Frequenzverteilung über der Zeit bei einem Einschaltvorgang.

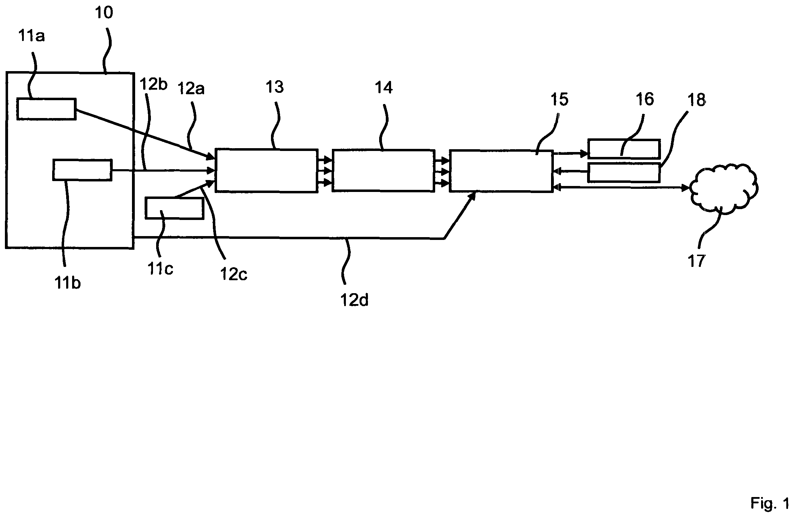

Fig. 1 zeigt eine schematische Darstellung einer Anordnung zum Bestimmen des Betriebszustands des Leistungsschalters 10. Ein solcher Leistungsschalter 10 wird üblicherweise mit einem geschlossenen Gehäuse in einer Schaltanlage eingesetzt und umfasst mechanische Bauteile wie einen Motor, Federn, Wellen, Stoßdämpfer und Puffer. Wenn der Leistungsschalter 10 in Betrieb ist, verursachen die mechanischen Bauteile Vibrationen und/oder Schallsignale, die in die gesamte Umgebung emittiert werden. Weitere Vibrationen oder Schallsignale entstehen durch Netzspannung (zum Beispiel 50-Hz-Brummen oder 100-Hz-Brummen oder Brummen anderer Netzfrequenzen) oder durch externe Quellen wie zum Beispiel laufende Maschinen in der Nähe des Leistungsschalters 10.

Ein erfahrener Wartungstechniker kann einzig auf Grundlage der Geräuschentwicklung beim Spannen der Federn sowie beim Auslösen eines Schaltvorgangs auf den Betriebszustand des Leistungsschalters 10 schließen. Das vorliegende Verfahren ermöglicht insbesondere eine automatisierte Bestimmung und Analyse des Betriebszustands. Darüber hinaus werden neben den durch das menschliche Gehör wahrnehmbaren Vorgängen weitere Betriebszustände bestimmbar.

Sensoren 11a, 11b, 11c sind hierzu in oder in der Nähe des Leistungsschalters 10 angeordnet. Die Sensoren 11a, 11b, 11c sind jeweils in der Lage, Vibrationen, Körperschall oder Luftschall aufzunehmen und arbeiten nach einem geeigneten physikalischen Prinzip. Als Sensoren 11a, 11b, 11c können zum Beispiel Piezomikrofone, Kondensatormikrofone, Körperschallaufnehmer, faseroptische Schalisensoren oder faseroptische Vibrationssensoren zum Einsatz kommen. Analoge Messsignale 12a, 12b, 12c der Sensoren 11a, 11b, 11c erfahren anschließend eine analoge Vorverarbeitung 13, in der die analogen Messsignale 12a, 12b, 12c gegebenenfalls verstärkt werden und/oder einen Anti-Aliasing-Filter durchlaufen.

Anschließend erfolgt eine Analog-Digital-Wandlung 14 der analogen Messsignale 12a, 12b, 12c, wobei ein einzelner Analog-Digital-Wandler im Multiplexverfahren oder mehrere Analog-Digital-Wandler im Parallelverfahren zum Einsatz kommen können. Die digitalisierten Messsignale werden anschließend in einer Auswerteeinrichtung 15 durch einen oder mehrere Prozessoren (beispielsweise durch eine CPU, einen Mikroprozessor, ein eingebettetes System, einen digitalen Signalprozessor oder einen anderen speziellen Prozessor), durch einen oder mehrere programmierbare Logikbausteine (beispielsweise ein Complex Programmable Logic Device, CPLD oder ein Field Programmable Gate Array, FPGA) oder durch einen Full Custom Chip verarbeitet. Im Anschluss wird ein Betriebszustand des Leistungsschalters 10 bestimmt und ein Ergebnis generiert und in einer Ausgabeeinrichtung 16 ausgegeben und/oder in ein Netzwerk 17 geleitet. Die Ausgabeeinrichtung 16 umfasst zum Beispiel eine LED oder ein Display.

Zur Interaktion mit der Auswerteeinrichtung 15 ist ein Eingabegerät 18 wie zum Beispiel eine Tastatur vorgesehen, die lokal oder über ein Netzwerk mit der Auswerteeinrichtung 15 verbunden ist. Ein Wartungstechniker kann damit Details der Messungen und/oder des Betriebszustands abrufen.

Prinzipiell reicht ein einzelner Sensor für das Verfahren aus. Allerdings beeinflusst die Anzahl der verbauten Vibrations- und Schallsensoren 11a, 11b, 11c die Qualität der Zustandseinschätzung. So lässt sich durch Verwendung mehrerer Sensoren 11a, 11b, 11c prinzipiell das Signal-Rausch-Verhältnis, mit dem die Messsignale 12a, 12b, 12c erfasst werden, verbessern. Des Weiteren kann die Frequenzbandbreite, mit der Vibrationssignale und/oder Schallsignale 12a, 12b, 12c aufgenommen werden, erhöht werden, indem die Frequenzbänder unterschiedlicher Sensoren 11a, 11b, 11c miteinander kombiniert werden. Mittels des Zusammenwirkens von Vibrations- und Ultraschallsensoren 11a, 11b, 11c lässt sich auf diese Weise mit moderatem Aufwand der durch Vibrationen emittierte Infraschall parallel zum Ultraschall erfassen.

Die Verwendung mehrerer Sensoren 11a, 11b, 11c ermöglicht des Weiteren mittels Laufzeitmessungen die Lokalisierung von für die Vibrations- und/oder Schallsignale verantwortlichen Quellen. Dies ist von Bedeutung, da mit dem Ort eines Vibrations- und/oder Schallereignisses auch die Ursache für das jeweilige Ereignis identifiziert werden kann. Wenn man ein Vibrations- und/oder Schallereignis bei einem Einschaltvorgang beispielsweise nahe einem für den Einschaltvorgang zuständigen Puffer lokalisieren kann, so dürfte der Schall durch das Anschlagen der Welle auf den Puffer erzeugt worden sein. Indem das Verfahren die Messsignale 12a, 12b, 12c nicht nur zur Einschätzung der Funktionsfähigkeit des Leistungsschalters 10 insgesamt, sondern auch zur Einschätzung der Funktionsfähigkeit des Puffers verwendet, lässt sich die Zuverlässigkeit der Betriebszustandsanalyse verbessern und präzisieren.

Die Zuordnung der Ursache für ein Vibrationssignale und/oder Schallsignale 12a, 12b, 12c kann mittels der Berücksichtigung von Steuersignalen, die am Leistungsschalter 10 Aktionen auslösen, verbessert werden. Falls beispielsweise Federn mit Hilfe eines Motors gespannt werden, so muss der Motor mit Strom versorgt werden. Ein Motorsignal 12d durch Abgriff eines motorstartenden Steuersignals und/oder eine Messung an einer Stromzuleitung des Motors (zum Beispiel mittels zusätzlicher Sensoren, die nichtmechanisch arbeiten) kann von der Auswerteeinrichtung 15 genutzt werden, um die entstehenden Vibrationen und Schallemissionen dem Motor oder einem anderen beteiligten Bauteilen zuzuordnen.

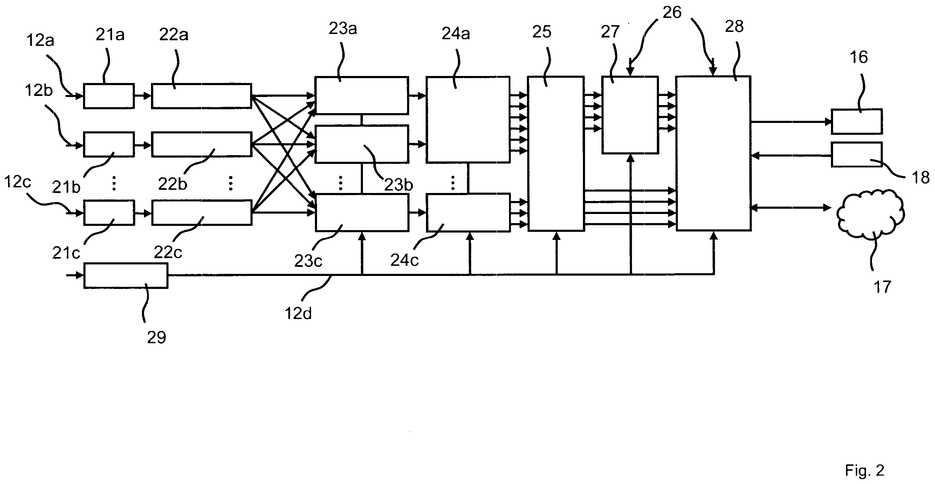

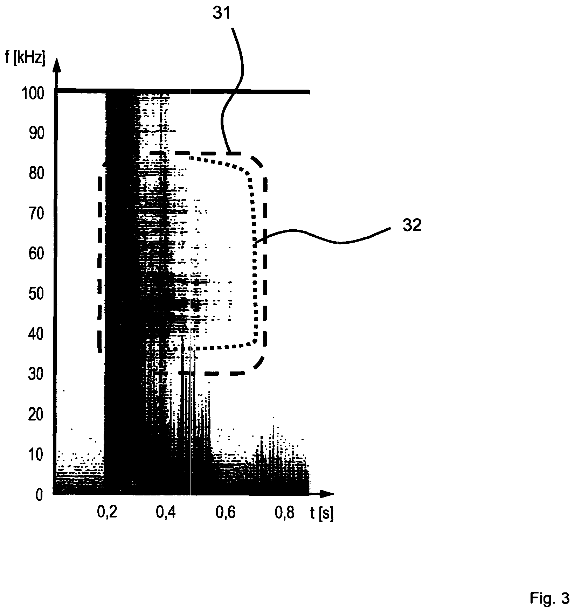

Fig. 2 zeigt eine schematische Darstellung des Verfahrens zum Bestimmen des Betriebszustands des Leistungsschalters 10. Nach der Analog-Digital-Wandlung 14 der Messsignale 12a, 12b, 12c mittels der Analog-Digital-Wandler 21a, 21b, 21c werden die erzeugten digitalen Signale wie unten erläutert algorithmisch verarbeitet. Prinzipiell sind weniger oder mehr als drei Eingangskanäle möglich. Dies ist in Fig. 3 durch Punkte zwischen den Elementen 21b und 21c bis 24a und 24c dargestellt. In konkreten Implementierungen sind Variationen der Algorithmen und der Reihenfolge, mit der die Algorithmen ausgeführt werden, möglich. Die Algorithmen können als Hardware und/oder Software umgesetzt sein.

Im Anschluss an die Analog-Digital-Wandlung 14 findet in einem ersten Verarbeitungsschritt eine digitale Vorverarbeitung 22a, 22b, 22c der digitalen Signale statt. In diesem Verarbeitungsschritt werden die Messdaten jedes einzelnen Sensors 11a, 11b, 11c separat bearbeitet. Dieser Verarbeitungsschritt ist optional, jedoch insbesondere vorteilhaft, falls die Messsignale 12a, 12b, 12c von Störsignalen (Rauschen), die für die Betriebszustandsanalyse keine Bedeutung haben, durchsetzt sind. In der Umgebung des Leistungsschalters 10 werden im Allgemeinen stark verrauschte Messsignale 12a, 12b, 12c auftreten. Um das Signal-Rausch-Verhältnis der Messsignale 12a, 12b, 12c zu verbessern, sind Verfahren zur Rauschreduzierung wie Tiefpassfilter, Notch-Filter oder Wavelets geeignet.

Falls mehrere Sensoren zum Einsatz kommen, können die digitalen Signale zueinander in Beziehung gesetzt werden. In einem zweiten Verarbeitungsschritt findet dazu eine kanalübergreifende digitale Signalvorverarbeitung 23a, 23b, 23c statt. Dies ermöglicht eine weitere Verbesserung des Signal-Rausch-Verhältnisses. Mit Verfahren zur Kanalseparation können darüber hinaus die durch unterschiedliche Signalquellen an dem Leistungsschalter 10 verursachten Vibrations- und Schallsignale 12a, 12b, 12c getrennt und dabei unterschiedlichen Quellen zugeordnet werden. Wird beispielsweise ein Schaltvorgang ausgelöst und werden dabei Vibrationen gleichzeitig durch eine Feder und einen Puffer verursacht, kann man unter Ausnutzung von Laufzeiteffekten zwei getrennte Signale berechnen, von denen das eine Signal ausschließlich der Feder und das andere Signal ausschließlich dem Puffer zuzuordnen ist. Die Trennung der Einzelsignale vereinfacht die Betriebszustandsanalyse des Leistungsschalters 10 beträchtlich.

In einem dritten Verarbeitungsschritt werden die vorverarbeiteten Signale kategorisiert. Ziel dieses Verarbeitungsschrittes ist es, die vorverarbeiteten Signale derart zu transformieren, dass möglichst nur solche Zustandsmerkmale verbleiben, die eine Einschätzung des Betriebszustands des Leistungsschalters 10 zuverlässig ermöglichen. Zur Bestimmung der Zustandsmerkmale können die Signale unterschiedlicher Kanäle zusammengeführt werden, 24a, oder aus einem einzelnen Kanal bezogen werden, 24c. Bei diesem Verarbeitungsschritt können Signalverarbeitungsverfahren wie zum Beispiel (Kurzzeit-)Fourier-Transformation, Wavelet-Transformation und/oder Template-Matching zum Einsatz kommen. In einfachen Fällen kann es bereits ausreichen, die Zustandsmerkmale direkt durch Auswertung der vorverarbeiteten Signale zu bestimmen, indem beispielsweise die Hüllkurven der jeweiligen Signale ermittelt werden.

In einem vierten Verarbeitungsschritt werden die zuvor bestimmten Zustandsmerkmale in einer ersten Klassifikationseinheit 25 analysiert, sodass vergleichbare Messsignale 12a, 12b, 12c bestimmten Ursachen zugeordnet werden, indem die Messsignale 12a, 12b, 12c gruppiert werden. Dieser Verarbeitungsschritt ist erforderlich, weil unterschiedliche Messungen niemals gleiche Messdaten generieren. Einerseits ändert sich der Betriebszustand des Leistungsschalters 10 mit jedem Schaltvorgang (weil beispielsweise eine Feder über die Zeit an Zugkraft verliert oder bricht oder die Betriebsspannung variiert); andererseits soll das hier vorgestellte Verfahren an unterschiedlichen Leitungsschaltern zum Einsatz kommen, die sich bezüglich der auftretenden Vibrations- und Schallemissionen unterscheiden können. Auch Einbau sowie Einbauort des Leistungsschalters 10 verändert dessen Frequenzverhalten beträchtlich. Als Klassifikationsverfahren können Algorithmen wie künstliche neuronale Netze, Fuzzy-Logiken, Deep learning, maschinenbasiertes Lernen oder Entscheidungsbäume verwendet werden. Durch Klassifizierung der Vibrations- bzw. Schallereignisse in der ersten Klassifikationseinheit 25 kann der Betriebszustand des Leistungsschalters 10 analysiert und Aussagen über den Betriebszustand getroffen werden.

In einem fünften Verarbeitungsschritt werden zeitliche Informationen 26 eingesetzt, um die Zuverlässigkeit der Bestimmung des Betriebszustands zu erhöhen. Hierzu nutzt eine zweite Klassifikationseinheit 27 aus, dass der Betriebszustand des Leitungsschalters 10 sich über die Zeit in kleinen Schritten verändert.

In einem sechsten Verarbeitungsschritt erfahren Ergebnisse, umfassend beispielsweise den Betriebszustand des Leistungsschalters 10 und/oder ein Analyseergebnis einer Analyse des Betriebszustands, eine Ergebnisaufbereitung 28.

Falls das Motorsignal 12d zunächst analog vorliegt, wird es einer Analog-Digital-Wandlung 29 unterzogen. Im Anschluss kann das Motorsignal 12d bei der Durchführung des zweiten bis sechsten Verarbeitungsschritts jeweils einbezogen und mitverarbeitet werden.

Die Ergebnisse können direkt an einen Benutzer über das Netzwerk 17 geleitet werden. Da sich die systeminterne Repräsentation der Ergebnisse schlecht zur Interpretation durch Benutzer eignet, ist es jedoch vor allem für Wartungspersonal sinnvoll, die Ergebnisse in eine leicht verständliche Form zu übersetzen. So lassen sich die Eingangsdaten und die Ergebnisse in tabellarischer Form, als Graphen oder Diagramme, durch Auflistung von Wahrscheinlichkeiten visualisieren und über die Ausgabeeinrichtung 16 präsentieren. Das Wartungspersonal kann mittels der Eingabeeinrichtung 18 Details der Messungen und/oder des Betriebszustands abrufen.

Für eine schnelle Betriebszustandsanalyse wäre darüber hinaus eine binäre Darstellung oder eine ternäre Darstellung als Ampel sinnvoll. Hierbei bedeutet die Farbe Grün, dass der Leistungsschalter 10 aktuell keiner Wartung bedarf. Die Farbe Gelb bedeutet, dass der Leistungsschalter 10 weiter betrieben werden darf, aber zeitnah gewartet werden sollte, da es Veränderungen im Verhalten des Leistungsschalters 10 gegeben hat, die zu einem Abweichen gegenüber dem Ursprungszustand geführt haben. Die Farbe Rot bedeutet, dass der Leistungsschalter 10 nicht mehr sicher betrieben werden darf.

Nicht alle zu Fig. 2 beschriebenen Schritte müssen in jeder Ausführung umgesetzt werden. Es kann zum Beispiel auf die kanalübergreifende digitale Signalvorverarbeitung 23a, 23b, 23c verzichtet werden. In einer weiteren Software-implementierten Ausführung können mehrere Verarbeitungsschritte auch zusammengefasst bearbeitet werden (zum Beispiel die erste Klassifikationseinheit 25 und die zweite Klassifikationseinheit 27). Ebenfalls möglich ist es, die Reihenfolge bei der Ausführung der beschriebenen Schritte zu modifizieren oder auf einzelne Verarbeitungsschritte zu verzichten.

Mit Hilfe des Verfahrens ist es möglich, die Mechanik von Leistungsschaltern 10 automatisch zu überwachen und zu einer Betriebszustandseinschätzung zu gelangen. Bei spontan auftretenden Problemen lässt sich auf diese Weise verhindern, dass der Leistungsschalter 10 länger außer Betrieb genommen werden muss (weil beispielsweise ein Defekt zur Zerstörung des Leistungsschalters 10 führt) oder überhaupt außer Betrieb genommen werden muss (zum Beispiel bei Schäden, die das kurzzeitige Weiterbetreiben des Leistungsschalters erlauben).

Da entsprechend ausgestattete Leistungsschalter 10 permanent überwacht werden, können routinemäßige Überprüfungen entweder ganz entfallen oder Wartungsintervalle im Vergleich zu herkömmlichen Leistungsschaltern 10 verlängert werden. Auf diese Weise lassen sich Kosten einsparen. Es ist möglich, an vorhandenen Leistungsschaltern 10 ein Diagnosesystem zur permanenten Betriebszustandsanalyse nachzurüsten. Zur Durchführung der Betriebszustandsanalyse von Leistungsschaltern 10 sind ein Ausbau und eine Außerbetriebnahme nicht notwendig. Übliche Wartungen an Leistungsschaltern 10 bedingen deren Ausbau oder zumindest deren Außerbetriebnahme und einen Eingriff in die Steuerung des Leistungsschalters 10. Dies ist nicht notwendig, sofern das hier beschriebene Verfahren zum Einsatz gebracht wird.

Das Verfahren ermöglicht den Einsatz eines einfachen und kostengünstigen eingebetteten Systems sowie geeigneter kostengünstiger, konventioneller Sensoren 11a, 11b, 11c. Die Fertigung eines entsprechend ausgestatteten Leistungsschalters 10 ist daher kaum teurer als die eines herkömmlichen Leistungsschalters. Gleichzeitig wird jedoch ein erheblicher Mehrwert erzielt. Insbesondere sind Fernwartung und Monitoring möglich und bieten daher ein erhebliches Einsparpotenzial hinsichtlich der Wartungs- und Instandhaltungskosten, da der Zustand des Leistungsschalters 10 durchgängig beobachtet werden kann.

Die Elektronik und die Sensorik lassen sich in einer Weise in Leistungsschaltern montieren, bei der sicherheitskritische Komponenten nicht verändert werden müssen. Auch ist ein Kontakt etwa zu Nieder-, Mittel- oder Hochspannung führenden Bauteilen nicht erforderlich. Beim Einsatz faseroptischer Sensoren ist ein Kontakt zum Beispiel zu Mittel- und Hochspannung führenden Bauteilen möglich. Die Technologie lässt sich darüber hinaus ohne großen Aufwand nachrüsten.

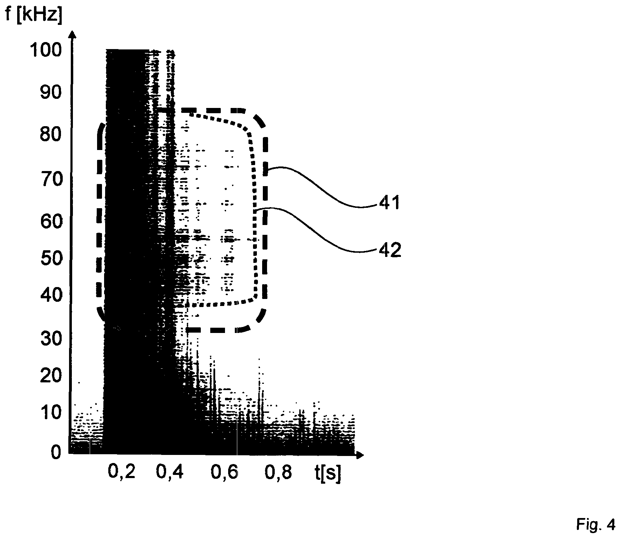

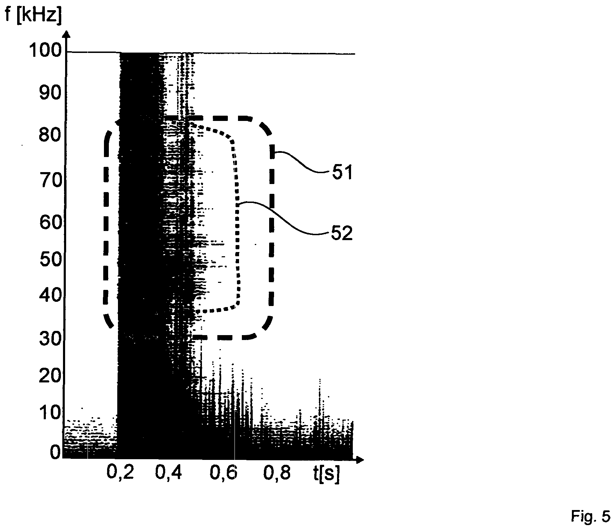

Fig. 3 zeigt eine schematische Darstellung eines mittels Kurzzeit-Fourier-Transformation bestimmten Spektrogramms auf Basis von Messsignalen bei einem Ausschaltvorgang eines Leistungsschalters 10, die mit einem faseroptischen Mikrophon aufgenommen wurden. Hierbei ist ein Quotient aus Power und Frequenz *Plf* gegen Laufzeit *t* und Frequenz *f* aufgetragen. Höhere Werte von *Plf* sind dunkel eingefärbt. Fig. 4 zeigt eine schematische Darstellung eines Spektrogramms auf Basis von Messsignalen bei einem Ausschaltvorgang des Leistungsschalters 10, wobei bei den Messungen der Drehwinkel der Schaltwelle des Leistungsschalters 10 geändert wurde. Fig. 5 zeigt eine schematische Darstellung eines Spektrogramms auf Basis von Messsignalen bei dem Ausschaltvorgang des Leistungsschalters 10, wobei ein Stoßdämpfer mit einer modifizierten Dämpfungscharakteristik verwendet wurde. Die Bereiche innerhalb der gestrichelten Linien 31, 41, 51 in den Fig. 3 bis 5 lassen erkennen, wie sich die einzelnen Modifikationen in den akustischen Emissionen und damit im Spektrogramm widerspiegeln. Die gepunkteten Linien 32, 42, 52 grenzen einen Bereich maximaler Amplituden der jeweiligen Frequenz ein. Eine Veränderung der jeweiligen Amplitude eines Frequenzanteils ist signifikant für einen bestimmten Zustand am Leistungsschalter. Dabei sind der Zeitpunkt des Auftretens eines spezifischen Frequenzanteils sowie die Amplitude, in Fig. 5 durch die Intensität der Schwärzung dargestellt, als Klassifikationsmerkmal geeignet. Die gestrichelten Linien 31, 41, 51 zeigen jeweils einen Bereich, der für eine Zustandsbestimmung des Leistungsschalters von Relevanz und geeignet ist und zu klassifizierenden Merkmale beinhaltet.

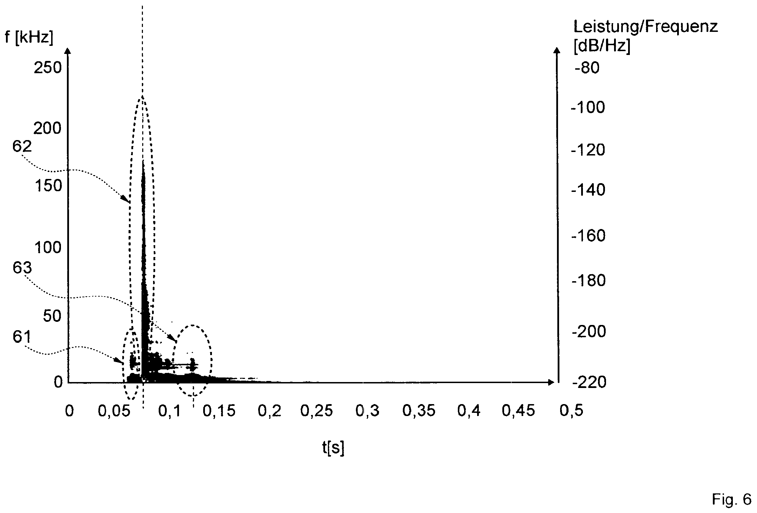

Fig. 6 zeigt eine schematische Darstellung eines Spektrogramms auf Basis von Messsignalen von an Schalterpolen angebrachten akustischen Sensoren bei einem Einschaltvorgang eines Leistungsschalters 10 mit einem vergrößerten Schalthub an den Schalterpolen von etwa 13 mm. Einem Impuls 61 einer Einschaltspule folgt zeitlich ein Impuls 62 zum Einschaltzeitpunkt (Kontaktgabe) und anschließend ein Impuls 63 zum Einklinkzeitpunkt. Insbesondere ist ein Auslösen eines Einschaltmagneten dem Impuls 61 und ein Verklinken einer Schalterwelle dem Impuls 63 zuordenbar. Eine Veränderung des Schalthubs etwa hin zu einem größeren Hub bedeutet, dass das Einschalten des Leistungsschalters 10 länger dauert. Dies gilt analog für die Kontaktschließung. Im Spektrogramm gemäß Fig. 6 sind die entsprechenden Zeitpunkte eindeutig identifizierbar.

In ähnlicher Weise können ein Auslösen eines Ausschaltmagneten sowie beim Ausschalten stattfindende Vorgänge dargestellt und analysiert werden. Veränderungen des Schalthubes haben auch beim Ausschalten deutliche Auswirkungen auf das mechanische, elektrische und physikalische Verhalten des Leistungsschalters 10. Verlängerungen von Ausschaltzeiten bei gleichzeitigem Stromfluss sind verbunden mit erhöhtem Abbrand an Schalterkontakten. Auch eine Veränderung von Schaltzeiten bei Kontaktgabe gehen damit einher und können auf dieselbe Weise festgestellt werden. Schaltgeschwindigkeiten und Schaltzeiten eines Leistungsschalters 10 sind elementar für erfolgreiches Ausschalten und Einschalten des Leistungsschalters 10. Aus diesem Grund existieren im Bereich elektrotechnischer Normen jeweils eigene Normen für schaltende Betriebsmittel, in der Funktionen von Leistungsschaltern in Prüfungen nachzuwiesen sind.

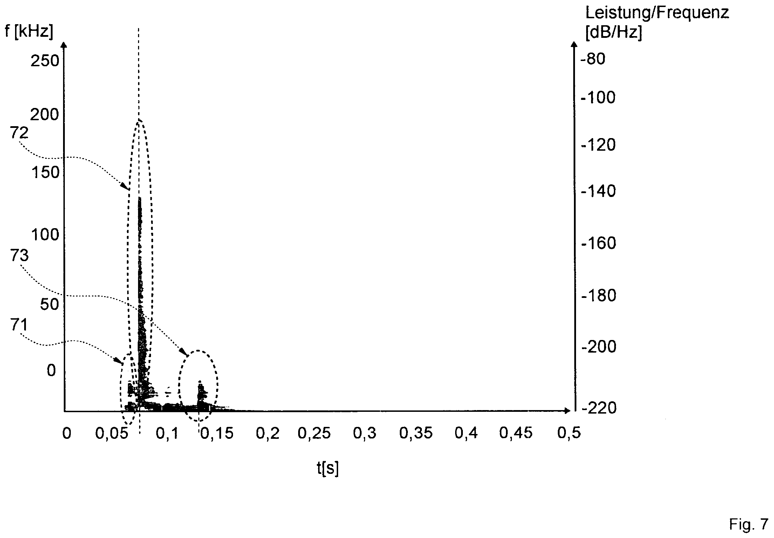

Fig. 7 zeigt eine weitere schematische Darstellung eines Spektrogramms auf Basis von Messsignalen von an Schalterpolen angebrachten akustischen Sensoren bei einem Einschaltvorgang des Leistungsschalters 10 bei verringertem Schalthub von etwa 10 mm. Einem Impuls 71 der Einschaltspule folgt ein Impuls 72 zum Einschaltzeitpunkt und anschließend ein Impuls 73 zum Einklinkzeitpunkt. Insbesondere zeigt Fig. 7 die Veränderung in der zeitlichen Auflösung des Spektrogramms bei verringertem Schalthub von 13 mm auf 10 mm. Sofern eine im Leistungsschalter 10 vorhandene Einschaltfeder durch das Auslösen einer Einschaltmechanik dem Impuls der Einschaltspule entsprechend in Bewegung gesetzt wird, treffen zunächst Kontaktelemente in einem Schalterpol aufeinander. Anschließend erfolgt ein mechanisches Verklinken derart, dass der Schalter eingeschaltet bleibt. Bei unterschiedlichen Schalthüben ändern sich damit sowohl die Zeiten, bis die Kontaktelemente aufeinandertreffen, als auch die Zeit, bis die mechanische Verklinkung am Leistungsschalter 10 einrastet. Alle diese Zeiten sowie die Veränderungen durch die unterschiedlichen Hübe können aus den Fig. 6 und 7 durch geeigneten Vergleich ermittelt werden. Der Impuls 72 zum Einschaltzeitpunkt in Fig. 7 bei geringerem Hub hat im Vergleich zum Impuls 62 zum Einschaltzeitpunkt in Fig. 6 eine höhere Anregung. Dies liegt daran, dass die Einschaltfeder aufgrund eines kleineren zurückgelegten Weges noch eine höhere gespeicherte Energie besitzt, welche beim Verklinken der Mechanik abgegeben wird.

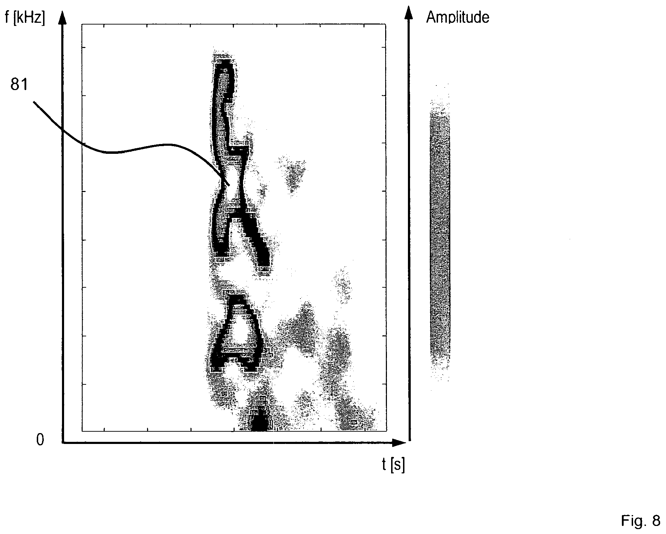

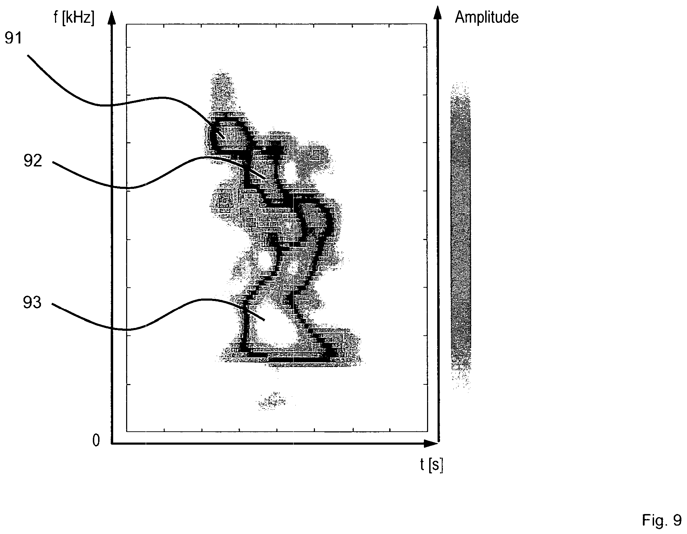

Fig. 8 und 9 zeigen jeweils eine auf Basis einer Wavelet-Analyse ermittelte spektrale Frequenzverteilung über der Zeit bei einem Einschaltvorgang mit unterschiedlichen Einstellungen des Schalthubs des Leistungsschalters 10. Bereiche mittlerer Amplitude sind dunkel eingefärbt, Bereiche niedriger und hoher Amplitude hell. Bei dem der Fig. 8 entsprechenden Einschaltvorgang wurde der Schalthub erhöht und bei dem der Fig. 9 entsprechenden Einschaltvorgang der Schalthub jeweils eines Pols erhöht, belassen beziehungsweise verringert.

In Fig. 8 ist ein oberer weißer Fleck 81 zu erkennen. Der Fleck 81 entsteht dadurch, dass die drei Kontaktelemente zeitgleich zusammentreffen und damit eine hohe mechanische Gesamtanregung hervorrufen. Treffen jedoch die einzelnen Kontaktelemente aufgrund unterschiedlicher Schalthübe in den einzelnen Polen zu unterschiedlichen Zeitpunkten aufeinander, so ergibt sich eine Frequenzverteilung und Intensitätsverteilung wie in Fig. 9 mit Flecken 91, 92 und 93 dargestellt. Hier sind drei einzelne weiße Flecken 91, 92, 93 mit geringer Ausdehnung erkennbar. Zugleich ist aus den Abständen der Flecken 91, 92, 93 untereinander in x-Richtung der zeitliche Zusammenhang zwischen der Kontaktgabe der einzelnen Schalterpole sichtbar. Aus der Darstellung in Fig. 9 können somit die Schaltzeitpunkte der einzelnen Schalterpole ermittelt werden.

Sofern Daten zum Neuzustand des Leistungsschalters 10 als Referenzdaten ermittelt werden (einem akustischen Vibrations-Fingerprint des Leistungsschalters. 10 entsprechend), können die Daten als Basis dienen, einen Kontaktverschleiß zu ermitteln. Sofern ein Kontaktabbrand an einem Schalterpol stattfindet, ändern sich die Schaltzeiten des Leistungsschalters 10. Die Kontaktelemente schließen gegenüber einem Ursprungszustand zu einem anderen Zeitpunkt. Zugleich lässt sich aus einem Vergleich der einzelnen Schaltzeitpunkte je Schalterpol aus den unterschiedlichen Schaltzeitpunkten ein Verschleiß jedes einzelnen Schaltpols ermitteln. Somit kann der Schaltzeitpunkt jedes einzelnen Schalterpols gemessen werden, womit sich Aussagen zum Verschleiß der Kontakte von Schalterpolen, Mechanik, oder Schaltgeschwindigkeiten treffen lassen und damit zur mechanischen Funktion von Antriebssystem sowie Auslösen von Einschalt- und Ausschaltspulen. Aus dieser Darstellung wird auch ersichtlich, ob der Leistungsschalter 10 überhaupt geschaltet hat und/oder ob sich Schaltzeiten oder Bewegungsabläufe des Leistungsschalters 10 verändert haben. Dies ist besonders wichtig, da ein nicht schaltender Leistungsschalter durch andere in Betrieb befindliche Leistungsschalter in seiner Funktion ersetzt werden muss.

Daten, wie sie den Fig. 3 bis 9 entsprechen, ermöglichen beispielsweise Aussagen hinsichtlich einer Öffnung eines Kontakts eines Schalterpols; einer Geschwindigkeit des Schließens eines Kontakts; einer Reihenfolge des Schließens von Kontakten; eines Zeitverzugs zwischen einzelnen Kontaktpunkten; eines Verschleißstatus und/oder Verschleißgrads eines Kontakts; einer Geschwindigkeit einer Drehbewegung einer Schaltwelle; einem Erfolg eines Ein- und/oder Ausschaltvorgangs; einer Antriebsenergie für einen Motoraufzug bei einem Federspeicherantrieb; einer Frage, ob eine Feder aufgezogen oder entspannt ist und/oder ob ein unerfasstes, anormales Frequenzspektrum vorliegt; eines Auslösevorgangs eines Einschaltmagneten; eines Freigabevorgangs von Sperrklinken; eines Schalterfolgs eines Ausschaltmagneten; eines Loslaufens einer Antriebswelle, eines Einrastens von Verklinkungen, einer Funktionsfähigkeit eines Speicherantriebs, einer Größe von Drehbewegungen der Schaltwelle; eines Erreichens einer Endlage der Schaltwelle; einer Veränderung einer Charakteristik und/oder einer Austauschbedürftigkeit eines Anschlagdämpfers; eines Energieumsatzes eines Federantriebssystems im Leistungsschalter; oder einer Frage, ob alle mechanischen Teile so miteinander in Funktion sind, dass eine Schaltfunktion gegeben ist.

Mittels der dargestellten Erkenntnisse ist es möglich, den Betriebszustand eines Leistungsschalters 10 mit einem oder mehreren konventionellen und faseroptischen Sensoren 11a, 11b, 11c und einem computergestützten System zu bestimmen. Dabei sind faseroptische Sensoren 11a, 11b, 11c zu bevorzugen, da sie auch auf Hochspannung führenden Schalterpolen befestigt sein und somit aussagekräftige Messdaten zum Zustand jedes einzelnen Schalterpols an der Quelle gewinnen können.

Eine Anbringung an ein Gehäuse einer Antriebsmechanik des Leistungsschalters 10 lässt ebenfalls Aussagen zu, in welchem Zustand sich der Leistungsschalter 10 befindet, ob sich eine Mechanik des Leistungsschalters 10 einwandfrei bewegt oder sich Veränderungen etwa durch harzende Fette einstellen, die zu einer Veränderung von Schaltzeiten führen. Die Anwendung von faseroptischen Sensoren ist nicht auf einen Leistungsschaltertyp oder eine Variante beschränkt. Ebenso besteht keine Einschränkung hinsichtlich der Spannungsebene oder der Schaltfähigkeit des Leistungsschalters 10.

Die Anwendung des erläuterten Verfahrens hat den bedeutenden Vorteil, dass durch ein einfaches Anbringen der Sensoren 11a, 11b, 11c an den Leistungsschalter 10 bereits eine Betriebszustandsanalyse und ein durchgängiges Monitoring möglich sind. Im Gegensatz zu bisherigen Analysen an Leistungsschaltern ist damit ein Eingriff in den Leistungsschalter 10 nicht erforderlich. Auch muss der Leistungsschalter 10 nicht außer Betrieb gesetzt werden und es ist kein Eingriff in die Ansteuerung des Leistungsschalters 10 notwendig. Somit entfallen lange Ausfallzeiten des Leistungsschalters 10, in denen dieser nicht zur Verfügung steht.

Die in der vorstehenden Beschreibung, sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Bestimmen eines Betriebszustands für ein elektrisches Betriebsmittel mit einem Schaltelement, aufweisend:
- Erfassen von Messsignalen (12a, 12b, 12c) für ein elektrisches Betriebsmittel mit einem Schaltelement mittels einer Sensoreinrichtung, die einen Sensor aufweist, wobei die Messsignale (12a, 12b, 12c) für das elektrische Betriebsmittel wenigstens eine Art von Messsignalen (12a, 12b, 12c) aus der folgenden Gruppe umfassen: Vibrationssignale und Schallsignale;
- Verarbeiten der Messsignale (12a, 12b, 12c) mittels einer Auswerteeinrichtung (15), wobei das Verarbeiten eine Analog-Digital-Wandlung (14) der Messsignale (12a, 12b, 12c) in digitale Messsignale umfasst; und
- Bestimmen eines Betriebszustands für das elektrische Betriebsmittel aus einer Gruppe von verschiedenen Betriebszuständen mittels der Auswerteeinrichtung (15), wobei die digitalen Messsignale mit Vergleichssignalen verglichen werden, die jeweils mindestens einem der verschiedenen Betriebszustände zugeordnet sind, wobei
- das Vergleichen der digitalen Messsignale mit den Vergleichssignalen eine maschinelle Klassifikation des Betriebszustands umfasst, **dadurch gekennzeichnet dass** die Messsignale (12a, 12b, 12c) mit Hilfe eines faseroptischen Sensors (11a, 11b, 11c) erfasst werden.

2. Verfahren nach Anspruch 1, **dadurch gekennzeichnet, dass** die Messsignale (12a, 12b, 12c) sowohl Vibrationssignale als auch Schallsignale umfassen.

3. Verfahren nach Anspruch 1 oder 2, **dadurch gekennzeichnet, dass** die Messsignale (12a, 12b, 12c) mithilfe von mehreren Sensoren (11a, 11b, 11c) erfasst werden.

4. Verfahren nach mindestens einem der vorangehenden Ansprüche, **dadurch gekennzeichnet, dass** die Schallsignale (12a, 12b, 12c) wenigstens eine Art Schallsignale (12a, 12b, 12c) aus der folgenden Gruppe umfassen: Infraschallsignale, Hörschallsignale und Ultraschallsignale.

5. Verfahren nach mindestens einem der vorangehenden Ansprüche, **dadurch gekennzeichnet, dass**
- der Betriebszustand für ein elektrisches Betriebsmittel inner- und / oder außerhalb einer Schaltanlage bestimmt wird; und / oder
- der Betriebszustand für ein elektrisches Betriebsmittel bestimmt wird, welches Hochspannung oder Niederspannung führt.

6. Verfahren nach mindestens einem der vorangehenden Ansprüche, **dadurch gekennzeichnet, dass** die Messsignale (12a, 12b, 12c) beim Verarbeiten vorverarbeitet werden, wobei hierbei für die Messsignale (12a, 12b, 12c) das Signal-Rausch-Verhältnis vergrößert wird.

7. Verfahren nach Anspruch 6, **dadurch gekennzeichnet, dass** die Messsignale (12a, 12b, 12c) analog mittels mindestens eines der Gruppe Tiefpass-, Hochpass-, Bandpass- und Anti-Aliasing-Filter vorverarbeitet werden.

8. Verfahren nach Anspruch 6 oder 7, **dadurch gekennzeichnet, dass** die Messsignale (12a, 12b, 12c) digital mittels mindestens eines der Gruppe Kerbfilter, Wavelet-Analyse, diskrete Fourier-Transformation, Fast Fourier Transformation und Short-Time-Fourier-Transformation vorverarbeitet werden.

9. Verfahren nach mindestens einem der vorangehenden Ansprüche, **dadurch gekennzeichnet, dass** beim Bestimmen des Betriebszustands mindestens ein den Betriebszustand des elektrischen Betriebsmittels charakterisierendes Zustandsmerkmal aus den digitalen Messsignalen bestimmt wird.

10. Verfahren nach Anspruch 9, **dadurch gekennzeichnet, dass** das mindestens ein Zustandsmerkmal mittels mindestens eines Mitglieds der Gruppe Fourier-Transformation, Kurzzeit-Fourier-Transformation, Wavelet-Transformation, Template-Matching, Spektrogramm und Hüllkurve bestimmt wird.

11. Verfahren nach Anspruch 9 oder 10, **dadurch gekennzeichnet, dass** der Betriebszustand des elektrischen Betriebsmittels durch Klassifikation von mindestens einem Zustandsmerkmal mittels mindestens eines maschinellen Klassifikationsverfahrens bestimmt wird.

12. Verfahren nach Anspruch 11, **dadurch gekennzeichnet, dass** das maschinelle Klassifikationsverfahren mittels der Vergleichssignale vor der Ausführung des Verfahrens und/oder im laufenden Betrieb trainiert wird.

13. Verfahren nach mindestens einem der Ansprüche 9 bis 12, **dadurch gekennzeichnet, dass** eine Zeitentwicklung des Betriebszustands des elektrischen Betriebsmittels und/oder des mindestens einen Zustandsmerkmals bestimmt wird.

14. Anordnung, mit:
- einem elektrischen Betriebsmittel, welches ein Schaltelement aufweist;
- einer Sensoreinrichtung, die einen Sensor aufweist und eingerichtet ist, Messsignale (12a, 12b, 12c) für das elektrische Betriebsmittel zu erfassen, wobei die Messsignale (12a, 12b, 12c) für das elektrische Betriebsmittel wenigstens eine Art von Messsignalen (12a, 12b, 12c) aus der folgenden Gruppe umfassen: Vibrationssignale und Schallsignale; und
- einer Auswerteeinrichtung (15), die eingerichtet ist,
- die Messsignale (12a, 12b, 12c) zu verarbeiten, wobei das Verarbeiten eine Analog-Digital-Wandlung (14) der Messsignale (12a, 12b, 12c) in digitale Messsignale umfasst; und
- einen Betriebszustand für das elektrische Betriebsmittel aus einer Gruppe von verschiedenen Betriebszuständen zu bestimmen, wobei hierbei die digitalen Messsignale mit Vergleichssignalen verglichen werden, die jeweils mindestens einem der verschiedenen Betriebszustände zugeordnet sind, wobei das Vergleichen der digitalen Messsignale mit den Vergleichssignalen eine maschinelle Klassifikation des Betriebszustands umfasst, **dadurch gekennzeichnet dass** der Sensor ein faseroptischer Sensor (11a, 11b, 11c) ist.

## Claims

1. A method for determining an operating state for an item of electrical equipment with a switch element, comprising:
- capturing measurement signals (12a, 12b, 12c) for an item of electrical equipment with a switch element by means of a sensor device which has a sensor, wherein the measurement signals (12a, 12b, 12c) for the item of electrical equipment comprise at least one type of measurement signal (12a, 12b, 12c) from the following group: vibration signals and sound signals;
- processing the measurement signals (12a, 12b, 12c) by means of an evaluation device (15), wherein the processing comprises an analogue-digital conversion (14) of the measurement signals (12a, 12b, 12c) into digital measurement signals; and
- determining an operating state for the item of electrical equipment from a group of different operating states by means of the evaluation device (15), wherein the digital measurement signals are compared with comparison signals which are assigned in each case to at least one of the different operating states,
wherein the comparison of the digital measurement signals with the comparison signals comprises a machine classification of the operating state,
**characterised in that**
the measurement signals (12a, 12b, 12c) are captured by means of a fibre-optic sensor (11a, 11b, 11c).

2. The method according to Claim 1, **characterised in that** the measurement signals (12a, 12b, 12c) comprise both vibration signals and sound signals.

3. The method according to Claim 1 or 2, **characterised in that** the measurement signals (12a, 12b, 12c) are captured by means of a plurality of sensors (11a, 11b, 11c).

4. The method according to at least one of the preceding claims, **characterised in that** the sound signals (12a, 12b, 12c) comprise at least one type of sound signal (12a, 12b, 12c) from the following group: infrasound signals, audible sound signals and ultrasound signals.

5. The method according to at least one of the preceding claims, **characterised in that**
- the operating state for an item of electrical equipment is determined inside and/or outside a switchgear; and/or
- the operating state is determined for an item of electrical equipment which carries high voltage or low voltage.

6. The method according to at least one of the preceding claims, **characterised in that** the measurement signals (12a, 12b, 12c) are pre-processed during the processing, wherein the signal-noise ratio is increased for the measurement signals (12a, 12b, 12c).

7. The method according to Claim 6, **characterised in that** the measurement signals (12a, 12b, 12c) are pre-processed in an analogue manner by means of at least one of the group including low-pass filter, high-pass filter, band-pass filter and anti-aliasing filter.

8. The method according to Claim 6 or 7, **characterised in that** the measurement signals (12a, 12b, 12c) are pre-processed in a digital manner by means of at least one of the group including notch filter, wavelet analysis, discrete Fourier transform, fast Fourier transform and short-time Fourier transform.

9. The method according to at least one of the preceding claims, **characterised in that** during the determination of the operating state at least one state characteristic which characterises the operating state of the item of electrical equipment is determined from the digital measurement signals.

10. The method according to Claim 9, **characterised in that** the at least one state characteristic is determined by means of at least one member of the group including Fourier transform, short-time Fourier transform, wavelet transform, template matching, spectrogram and envelope curve.

11. The method according to Claim 9 or 10, **characterised in that** the operating state of the item of electrical equipment is determined by classification of at least one state characteristic by means of at least one machine classification method.

12. The method according to Claim 11, **characterised in that** the machine classification method is trained by means of the comparison signals before the implementation of the method and/or during operation.

13. The method according to at least one of Claims 9 to 12, **characterised in that** a time development of the operating state of the item of electrical equipment and/or the at least one state characteristic is determined.

14. An arrangement comprising:
- an item of electrical equipment which has a switch element;
- a sensor device which has a sensor and is configured to capture measurement signals (12a, 12b, 12c) for the item of electrical equipment, wherein the measurement signals (12a, 12b, 12c) for the item of electrical equipment comprise at least one type of measurement signal (12a, 12b, 12c) from the following group: vibration signals and sound signals; and
- an evaluation device (15) which is configured
- to process the measurement signals (12a, 12b, 12c), wherein the processing comprises an analogue-digital conversion (14) of the measurement signals (12a, 12b, 12c) into digital measurement signals; and
- to determine an operating state for the item of electrical equipment from a group of different operating states, wherein the digital measurement signals are compared with comparison signals which in each case are assigned to at least one of the different operating states,
wherein the comparison of the digital measurement signals with the comparison signals comprises a machine classification of the operating state,
**characterised in that**
the sensor is a fibre-optic sensor (11a, 11b, 11c).

## Revendications

1. Procédé de détermination d'un état de fonctionnement d'un équipement électrique comportant un élément de commutation, comprenant :
- la détection de signaux de mesure (12a, 12b, 12c) pour un équipement électrique comportant un élément de commutation au moyen d'un dispositif de capteur, qui présente un capteur, dans lequel les signaux de mesure (12a, 12b, 12c) pour l'équipement électrique comprennent au moins un type de signaux de mesure (12a, 12b, 12c) du groupe suivant : signaux vibratoires et signaux sonores ;
- le traitement des signaux de mesure (12a, 12b, 12c) au moyen d'un dispositif d'évaluation (15), dans lequel le traitement comprend une conversion analogique-numérique (14) des signaux de mesure (12a, 12b, 12c) en signaux de mesure numériques ; et
- la détermination d'un état de fonctionnement de l'équipement électrique à partir d'un groupe d'états de fonctionnement différents utilisant le dispositif d'évaluation (15), dans lequel les signaux de mesure numériques sont comparés à des signaux de comparaison dont chacun est associé à au moins un des différents états de fonctionnement,
dans lequel
la comparaison des signaux numériques de mesure avec les signaux de comparaison comprend une classification automatisée de l'état de fonctionnement,
**caractérisé en ce que**
les signaux de mesure (12a, 12b, 12c) sont détectés à l'aide d'un capteur à fibre optique (11a, 11b, 11c).

2. Procédé selon la revendication 1, **caractérisé en ce que** les signaux de mesure (12a, 12b, 12c) comprennent à la fois des signaux vibratoires et des signaux sonores.

3. Procédé selon la revendication 1 ou 2, **caractérisé en ce que** les signaux de mesure (12a, 12b, 12c) sont détectés à l'aide de plusieurs capteurs (11a, 11b, 11c).

4. Procédé selon au moins une des revendications précédentes, **caractérisé en ce que** les signaux sonores (12a, 12b, 12c) comprennent au moins un type de signaux sonores (12a, 12b, 12c) du groupe suivant : signaux infrasonores, signaux sonores auditifs et signaux ultrasonores.

5. Procédé selon une au moins des revendications précédentes, **caractérisé en ce que**
- l'état de fonctionnement d'un équipement électrique est déterminé à l'intérieur et/ou à l'extérieur d'un appareillage ; et/ou
- l'état de fonctionnement est déterminé pour un équipement électrique, qui transporte de la haute ou de la basse tension.

6. Procédé selon une au moins des revendications précédentes, **caractérisé en ce que** les signaux de mesure (12a, 12b, 12c) sont prétraités lors du traitement, ce qui permet d'augmenter le rapport signal/bruit des signaux de mesure (12a, 12b, 12c).

7. Procédé selon la revendication 6, **caractérisé en ce que** les signaux de mesure (12a, 12b, 12c) sont prétraités analogiquement au moyen d'au moins un du groupe : filtre passe-bas, filtre passe-haut, filtres passe-bande et filtre anti-repliement.

8. Procédé selon la revendication 6 ou 7, **caractérisé en ce que** les signaux de mesure (12a, 12b, 12c) sont prétraités numériquement au moyen d'au moins un du groupe : filtre coupe-bande, analyse par ondelettes, transformation de Fourier discrète, transformation de Fourier rapide et à court terme.

9. Procédé selon au moins une des revendications précédentes, **caractérisé en ce que** lors de la détermination de l'état de fonctionnement, au moins une caractéristique d'état caractérisant l'état de fonctionnement de l'équipement électrique est déterminée d'après les signaux de mesure numériques.

10. Procédé selon la revendication 9, **caractérisé en ce que** la au moins une caractéristique d'état est déterminée en utilisant au moins un membre du groupe transformation de Fourier, transformation de Fourier à court terme, transformation en ondelettes, concordance de modèle, spectrogramme et enveloppe.

11. Procédé selon la revendication 9 ou 10, **caractérisé en ce que** l'état de fonctionnement de l'équipement électrique est déterminé en classifiant au moins une caractéristique d'état à l'aide d'au moins un procédé de classification automatisé.

12. Procédé selon la revendication 11, **caractérisé en ce que** le procédé de classification automatisé est entraîné à l'aide des signaux de comparaison avant la mise en oeuvre du procédé et/ou pendant le fonctionnement.

13. Procédé selon une au moins des revendications 9 à 12, **caractérisé en ce que** une évolution temporelle de l'état de fonctionnement de l'équipement électrique et/ou de la ou des caractéristiques d'état est déterminée.

14. Agencement, comportant :
- un équipement électrique, qui présente un élément de commutation ;
- un dispositif de capteur qui possède un capteur et est configuré pour recevoir des signaux de mesure (12a, 12b, 12c) pour détecter l'équipement électrique, dans lequel les signaux de mesure (12a, 12b, 12c) pour l'équipement électrique comprennent au moins un type de signaux de mesure (12a, 12b, 12c) du groupe suivant : signaux vibratoires et signaux sonores ; et
- un dispositif d'évaluation (15) qui est conçu pour
- traiter les signaux de mesure (12a, 12b, 12c), dans lequel le traitement comprend une conversion analogique-numérique (14) des signaux de mesure (12a, 12b, 12c) en signaux de mesure numériques ; et
- déterminer un état de fonctionnement pour l'équipement électrique à partir d'un groupe d'états de fonctionnement différents, dans lequel dans ce cadre les signaux numériques de mesure sont comparés à des signaux de comparaison qui sont chacun affectés à au moins un des différents états de fonctionnement,
dans lequel la comparaison des signaux numériques de mesure avec les signaux de comparaison comprend une classification automatisée de l'état de fonctionnement,
**caractérisé en ce que**
le capteur est un capteur à fibre optique (11a, 11b, 11c).
